# EUROPEAN PATENT APPLICATION

(11) **EP 3 388 938 A1**
(43) Date of publication of application: **17.10.2018**
(21) Application number: 17166182.0
(22) Date of filing: 12.04.2017
(51) Int. Cl.: G06F 9/451, G06F 3/14, H04N 21/254, H04N 21/41, H04N 21/414

(54) **A METHOD AND SYSTEM FOR PAIRING AT LEAST TWO ELECTRONICAL DEVICES**

(71) Applicant: Telefónica Germany GmbH & Co. OHG, 80992 München (DE)
(72) Inventor: Henrici, Dirk, 80797 München (DE); Rambold, Michael, 86152 Augsburg (DE); Schöpf, Philipp, 80335 München (DE)
(74) Representative: Herrmann, Uwe

(57) **Abstract**

The present invention is directed to a method for pairing at least two electronical devices (1, 2) by use of a backend entity (3) running a messaging service wherein the method comprises the steps of registering a first electronical device at the backend entity for indicating its presence at the messaging service, registering a second electronical device at the backend entity for indicating its presence at the messaging service, exchanging and/or negotiating pairing information between the first and second device via the messaging service, and pairing the first and second device by use of the exchanged pairing information for displaying screen information provided by the first device on a screen of the second device.

## Description

The invention is directed to a method and a system for pairing at least two electronical devices, in particular to establish a screen sharing connection between the two devices.

Smartphones and tablets became powerful computing devices and their capabilities are further increasing. There is already a vast ecosystem of applications which is getting larger from day to day. Devices, in particular mobile devices like smartphones and tablets, store applications, contacts or other data and become more and more a central part and hub of the "digital life".

On the other hand, smartphones and tablets usually have a very small screen size (or other limitations with input/output devices as well). In a typical household further devices with larger screens exist, e.g. PC monitors or televisions (or more powerful input/output devices). It is desirable to use the comparable huge screens of those devices for displaying data of the mobile devices. If smartphones and tablets really become the center of "digital life", it make sense to run the applications on these devices and use the bigger screen of the other devices like television just as display devices.

In the long run, the above way appears to be the better approach instead of having a plurality of independent devices which need to be regularly synchronised. A single personal device appears to be much more user-friendly since the user always has "his" environment available.

In the near future even todays desktop PCs might become obsolete. Processing power of future smartphones/tablets will be sufficient to run most of the applications which currently still require hardware resources of a desktop PC. Only peripheral devices like big monitors, input devices (e.g. desktop keyboards, scanners) and output devices (e.g. printers) will still be necessary as separate devices. Already today, we see the shortcomings of having separate devices with individual applications installed thereon. The best example are SmartTVs. The user needs to get familiar with different user environments and different proprietary app stores. Moreover, the devices have security vulnerabilities requiring the user to pay attention to, and data sharing between the devices is difficult. The SmartTV vendors created smartphones/tablets apps for remote controlling their environment - but that's all. Future customer requirements will be different: The smartphone will not be considered as an input device (remote control) for a Smart TV. Instead, the smart TV should serve as a mere output device for the smartphone/tablets.

The above motivation focusses on smartphones/tablets but is not limited to such devices. Other computing devices like watches, wearables, glasses, or whatever are conceivable.

As mentioned above it is conceivable that the screen of the smartphones/tablets shall be mirrored to another screen, e.g. a computer monitor or a TV screen. Several application and protocols are known but they all require installation of necessary application or software packages. Further, configuration of a screen sharing connection is complicated and time consuming which makes it rather unattractive for the majority of standard user without technical experience. The configuration complexity further increases when public output devices or devices in offices or hotel rooms should be used for mirroring the screen of the user device.

Therefore, it is the object of the present invention to provide a solution for a user-friendly pairing process.

The object is solved by a method according to the features of claim 1. Preferably aspects of the invention are subject matter of the sub claims.

According to the invention a backend entity is introduced running a messaging service allowing the exchange of messages between at least two devices via the messaging service, i.e. via the backend entity. The messaging service may be implemented by a dedicated messaging server running on the backend entity.

The method further includes the steps of registering at least a first electronical device at the backend entity for indicating its presence at the messaging service, registering at least a second electronical device at the backend entity for indicating its presence at the messaging service. After registration pairing information is exchanged and/or negotiated between the first and second device via the messaging service, i.e. the backend entity.

The messaging service is preferable an instant messaging service. Implementation may be passed on the Extensible Messaging and Presence Protocol (XMPP) or on an IP Multimedia Subsystem (IMS).

The first electronical device can be a mobile user device, for instance a smartphone, tablet, wearable, laptop or the like. The second electronical device may be a stationary device having a usually larger output screen. For example, the second electronical device may be a computer monitor, flat TV, beamer, or the like. Optionally, one or more periphery devices (printers, input devices, scanners, etc.) may be connected to the second electronical device.

By way of the messaging service, the first and second device can exchange necessary pairing information or even negotiate pairing parameters for the subsequent pairing step of the two devices. The pairing information exchange is automatically performed by the first and second device via the messaging service after a triggering event. The user may initiate the process but is not involved during the exchange. Lastly, the first and second device are paired by use of the exchanged pairing information so that screen information provided by the first device can be displayed on a screen of the second device. The established connection allowing screen sharing or screen mirroring is called a working connection.

The first and second devices neither need to be in the same ownership nor need to be associated with the same administrative domain, i.e. the same local network. Devices in different administrative domains can exchange messages with each other over the messaging service. Therefore, by way of the messaging service means for bridging network connectivity in different administrative domains and a working solution in almost arbitrary hardware and software environments are provided.

The working connection between the first and second device is preferable a direct connection between the first and second device. A direct connection is characterised by a low latency and uses the available resource most efficiently. However, a direct connection is not mandatory.

The complete procedure enables a very user-friendly and self-explaining pairing procedure between two devices. The complete set up procedure can be done without the need of prior configuration. It is only required to register both, the first and second device with the messaging service.

Further, the solution works network-independently due to the integration of the backend entity. Even if the first and second devices are not in the same network, e.g. in a hotel, screen sharing is possible. Screen devices (second devices) from multiple vendors can be supported; vendors shall not be required to implement support for the solution to work.

A temporary pairing shall be possible so that also screens (second devices) not owned by the smartphone/tablet user can be used (e.g. the TV in a hotel).

The backend entity can be either a central server system or a distributed server system operated by one or even more operators. During exchange or negotiation of pairing information, it is preferable that an optimal transmission path between the first and second client for the screen information is detected and negotiated, in particular with respect to the transmission latency between both devices.

The display of screen information provided by the first device on a screen of the second device may be based on desktop sharing procedures or desktop mirroring procedures. The display content of the first device may be just mirrored to the second device. Instead, the screen of the second device could serve as the primary or an additional screen of the first device.

For instance, the pairing step includes setting up a working connection via a remote desktop protocol. Possible protocol types are SPICE and/or X11 and/or VNC and/or Citrix and/or NX. Alternatively or additionally, the working connection could also be based on a screencast protocol, for instance airplay and/or WiDi and/or Miracast and/or DIAL. Alternatively or additionally, display of screen information provided by the first device on a screen of the second device may be based on a browser based application or script, in particular on a web socket connection or WebRTC.

Execution of the inventive method may be controlled by a dedicated stand-alone application module installed on either the first or second device or both of them. Alternatively, the method may be controlled by a browser based application, that is to say a browser running a dedicated script for setting up a working connection between both devices.

In a preferable aspect of the present invention, the first and second client may use different protocols or applications for the transmission of the screen information to be displayed between both devices. In particular, a first client device may use one of the above cited protocols wherein a second client device works on basis of a browser based script application using WebRTC. In that case, an appropriate mechanism for protocol conversion is necessary. Such mechanism may be implemented at the backend entity which will take over the necessary steps for protocol translation.

Due to several reasons, the working connection between both devices should be a direct one, that is to say the working connection should at least not be redirected over the backend entity which would cause a higher latency. Therefore, it is also possible to integrate the protocol conversion means into the first device.

According to a further preferred aspect of the invention, the second device makes registration information about its registration at the messaging services available for retrieval by the first device. Thereby, a user of the first device may gather the necessary registration information when being in the immediate vicinity of the second device. Thereby, it is ensured that screen information provided by the first device can only be displayed at the second device when the user is close to the second device. In particular, the registration information is supplemented by a security token having a limited validity period. In that case, registration information provided by the second device is only valid for a certain period and is only convenient for the exchange of pairing information between the first and second device as long as the token is valid. Therefore, it is conceivable that the registration information provided by the second device is regularly updated after the validity period. Preferable, the registration information and/or token is generated and provided by the backend entity to the second device.

It is particular advantageous if the second device displays its registration information on its local screen, preferably by way of a webpage which is generated by a web server of the backend entity. Said webpage can be accessed by the second device and thereby brought onto the local screen of the second device. It may be possible that the first device can scan the displayed registration information in order to trigger the exchange and negotiation of pairing information between the first and second device via the messaging service.

In particular, that registration information may be encoded into a machine-readable graphical code which can be scanned by the first device. A possible embodiment of such machine-readable graphical code is a so-called QR-code. Such graphical code may be displayed on the screen of the second device, in particular integrated into the displayed webpage on the local screen on the second device.

Alternatively, the registration information may not be displayed at the screen but provided via an appropriate transponder storing the registration information and transmitting it over a communication link to the first client. Preferred is a so-called nearfield communication tag which stores the necessary registration information on its local memory and transmits the stored information to a first device when the first device gets into the transmission range of the tag. Said tag may be arranged in or on a housing of the second device.

If the tag cannot be regularly updated by the backend entity regarding the security token an alternative handshake procedure should be implemented in order to verify that the first client device is next to the second device during execution of the inventive method.

However, any electronical sharing of the registration information may also be possible, for instance via a dedicated email sent from the backend entity and/or the second device to the first device.

The registration information provided by the second device may also be encoded in an URI or URL which can be directly accessed by the first device. The first device using said URI or URL may be forwarded to a webpage provided by the webserver of the backend entity. The accessed webpage may offer a guide for initiating the exchange of pairing information for the user of the first device. The user guide may also guide the user through the necessary registration steps for the messaging service.

In a preferred aspect of the present invention an advertising provider/server is implemented at the backend entity. Alternatively, an external advertising provider could be linked or associated with backend entity. By way of the advertising provider content for advertisements can be provided and delivered to the first and/or second device in order to create revenue with the inventive method. In particular, advertisements can be delivered to the second device together with the registration information displayed at the second device and/or embedded into the webpage provided for the first device offering the user guide for registration and exchange of pairing information. Furthermore, advertisements may be graphically included into the QR-code. Upon user request the first or second device is redirect to a webpage of the advertiser.

Since the backend entity has personal information about the users of the first and second device, in particular personal information about the registration at the messaging service, it may also be possible to deliver advertisement targeted to the respective user of the first and/or second device.

The exchanged pairing information particularly contains details about the supported protocols of the first and second device, e.g. the supported remote desktop protocols and/or screencast protocols and/or web based scripts and/or information regarding a security handshake for the pairing connection. Further details may be directed to the screen sizes used for the screen sharing/mirroring and/or the network reachability of the first and/or second device.

Also, as already mentioned above, the best performance for the screen mirroring or screen sharing may be achieved via a direct connection between the first and second device. However, a direct connection between the first and second may be prohibited or nor possible, particularly if the devices are connected via different access networks (e.g. wired vs. cellular) or due to firewall rules or any other security reasons. Under such circumstances, a relay node may be implemented at the backend entity ensuring the connectivity between the first and second device. The traffic between the first and second device caused by the remote desktop protocol and/or screencasting protocol or browser based media streaming will be redirected via the relay node of the backend entity.

The second devices may be integrated into a local network, in particular a secured local network. In that case it is possible that the pairing information includes access credentials for said local network of the second device. After exchange of said pairing information the first device will get automatically access to the local network during the pairing process step. For instance, due to the favorable properties of a direct connection (lower latency etc.) in which first device and second device reside in the same local network, it makes sense that the local network of the second device (due to the usually bigger screen the second device often has a fixed location and is therefore permanently attached to a local network) provides a connectivity service like a wireless network that the first device is able to use. Therefore, a successful pairing process for the first and second device can also be used to automatically provide the needed access credentials to use that locally provided connectivity. This way, no additional user interaction is needed to use the connectivity service. An example scenario is a TV screen in a hotel room as second device. The hotel guest would have his smartphone or tablet as first device and do the pairing to make use of this TV screen. The same pairing process could result in the access credentials of the hotel wireless lan to be provided to the hotel guest's device and connectivity automatically be established. This way, communication between the devices now could use efficient local communication and the guest is conveniently connected to the hotel wireless lan where he can also be provided regular Internet access if wanted.

The method also enables a multicast application that is to say more than one second devices could be paired with the first device so that screen information may be transmitted and displayed on the screens of different second devices synchronously or time delayed.

Furthermore, it may also be possible for the first device paired to the second device to control one or more periphery devices linked to the second device. There is a wide variety of conceivable devices. Straight-forward one like keyboard, pointing devices (e.g. a mouse) or printer in a hotel room but also exotic ones like a bank-connected cash dispenser in a publicly accessible area.

It is conceivable that the screen information displayed on the screen of the first device and which is intended to be display on the screen of the second device is originally provided by a third party server, in particular a cloud-desktop. In that case it may make no sense to transmit the screen information via the first device to the second device. Instead, it might be more applicable that the screen information is directly retrieved by the second device from the third party server. Therefore, the paring process also includes a connection setup between said third party server and the second device.

The present invention is also directed to a system comprising a backend entity, at least a first and at least a second device wherein all devices and servers are configured to perform the inventive method as explained in detail above. Therefore, the system is characterised by the same advantages and properties as discussed with respect to the inventive method.

Further, the invention is also directed to a backend entity configured to perform the necessary method steps according to the present invention. In particular, the backend entity includes at least a webserver and a messaging server. Additionally, the backend entity may include a web socket/protocol proxy and a relay node. Furthermore, an ad provider can be directly integrated into the backend entity. The backend entity may be a central system or a distributed system.

Lastly, the invention is also directed to a computer readable memory storage device storing software code for carrying out the inventive method either performed at the first device and/or the second device and/or the backend entity.

Embodiments of the invention should be discussed in the following with respect to the drawings. The drawings show:
- Figure 1:: the physical set up of the inventive system;
- Figure 2:: the application set up of the inventive system;

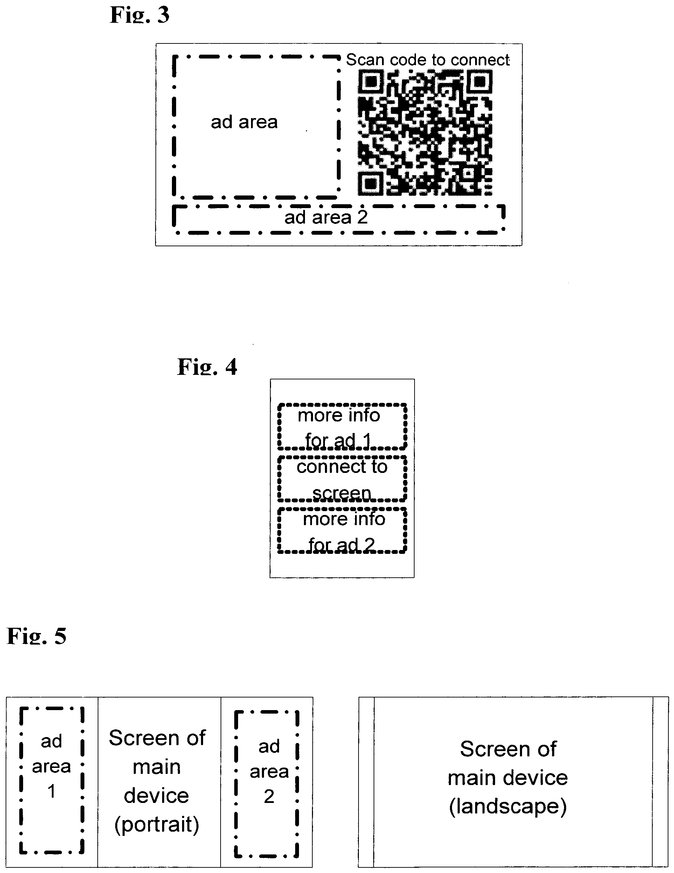

- Figure 3:: a screenshot of the displayed registration at the second device;
- Figure 4:: a screenshot of the screen of the first device
- Figure 5:: screenshots of the screens of the first and second device during a working connection.

The invention is discussed by way of a concrete embodiment. As a first device a smartphone/tablet is used. The screen of the smartphone should be reproduced onto the screen of a second device, i.e. onto the screen of a public television. In the following the first device is called the main device wherein the second device which should reproduce the screen content of the smartphone (main device) on its screen is called output device.

In the following the method is described from the user's point-of-view

### 1. Running application on "output device" (public Television):

A web site is loaded (or a stand-alone client started) on the output device. It shows a QR code. Optionally, also some ads can be shown. Such ads generate revenue in exchange for providing service.

### 2. Running application on "main device" (Smartphone):

On the smartphone/tablet a controlling application is started. The application offers to scan a QR-code. In addition as an optional feature, a contact list of already known output devices to use can be shown. Like in other smartphone apps, ads can be shown optionally, e.g. at the bottom area.

### 3. Scanning the QR code:

When the user scans the QR code on the output device, this proves that the smartphone/tablet and the output device are currently located in immediate vicinity.

### 4. Connecting:

In the smartphone/tablet application, the user can now choose whether to just connect to the output device or also to open a web browser in which more information on the currently shown ad on the screen of the output device is displayed. If no ads are used, this user interaction can be skipped and the connection is established instantly.

### 5. Normal work:

The two devices are temporarily paired with each other now. The screen of the output device shows the screen content of the smartphone/tablet. The user can now use his smartphone/tablet as usual. The screen content is mirrored to the screen of the connected output device. Special applications that are dual-head capable could also use the screen of the output device as independent second screen. Optionally, peripherals (input devices like keyboard and mouse) connected to the output device can be used to control the smartphone/tablet. As an additional feature, using other peripherals (like connected printers) can be virtually attached to the smartphone/tablet.

### 6. Disconnecting:

The connection between smartphone/tablet is terminated on user request. The output device again shows a QR code to allow new pairing, see point 1.

The pairing using a QR code is just an example. Other means of user-friendly data transfer can be employed as well (e.g. Near Field Communication, other 2D/3D codes, or Bluetooth).

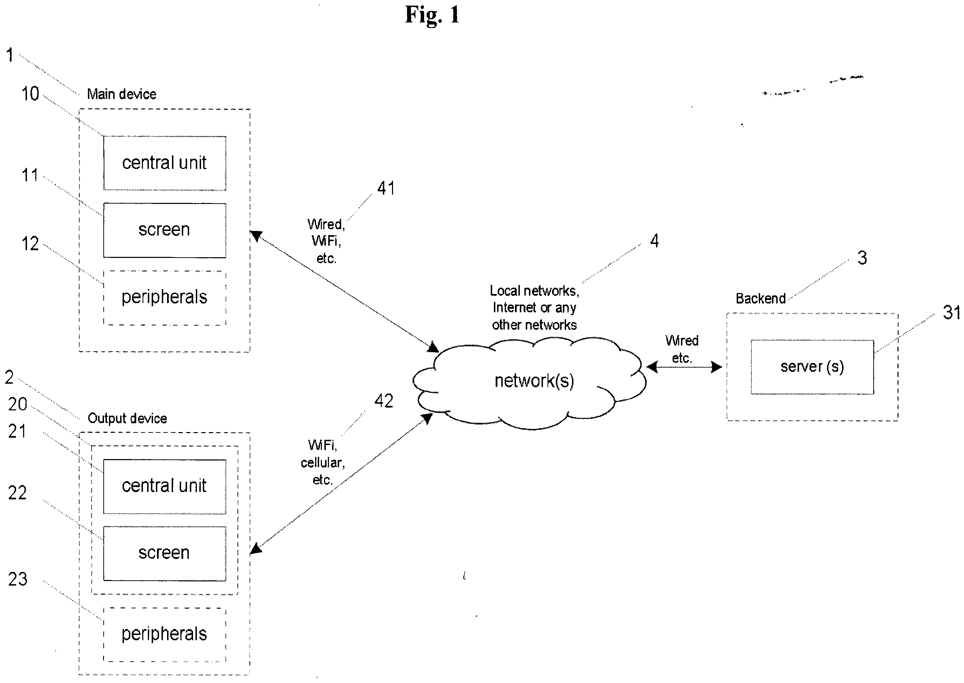

With respect to figure 1 the physical setup of the inventive system should be discussed. The system physically consists of a main device 1, an output device 2 and a backend entity 3. Connectivity between these three entities is established by a network 4.

The main device 1 is usually a smartphone or tablet. But it can also be any other computing device. It is the device that runs the user applications unless running the applications is off-loaded towards a cloud service. It consists of a central unit 10 running the applications and providing connectivity, a screen or touch screen 11 and optionally additional peripherals 12, e.g. other input devices like an external keyboard.

The output device 2 is the device whose screen shall be used to display the content of the screen of the main device. The output device consists of a central unit 20 controlling the device and providing network connectivity, a display/screen 21 and optionally peripherals 22, e.g. other input devices like mouse or keyboard or output device like a printer. The output 2 device can be a SmartTV with a web browser or a standalone application running on it, a dongle-device connected to a "normal" TV or SmartTV , a dongle-device with a web browser or a stand-alone application running on it and connected to a PCmonitor or a normal PC/notebook with a web browser or a stand-alone client application running on it.

The backend 3 consists of one or several servers running backend services. These services can be operated by a single operator or by multiple operators.

The network 4 provides connectivity between the three entities. It is composed of LANs (local area networks) and other networks like the internet in which the devices 1, 2 and the backend 3 reside. The LANs are interconnected, in practice by the Internet. It is expected that one or more middleboxes are present in the network that may limit direct reachability to the main device 1 and the output device 2 from the outside, e.g. there could be home routers performing address masquerading (port address translation between inside network and the Internet). Other middleboxes like Firewalls may be present but considered to be configured properly to allow required connectivity. By just relying on the http/https protocol, firewall trouble can be limited. Connectivity between the main device 1, the output device 2 and the backend 3 can be realized by arbitrary physical means in the access network 4, e.g. wired or by different kinds of wireless networks 41, 42.

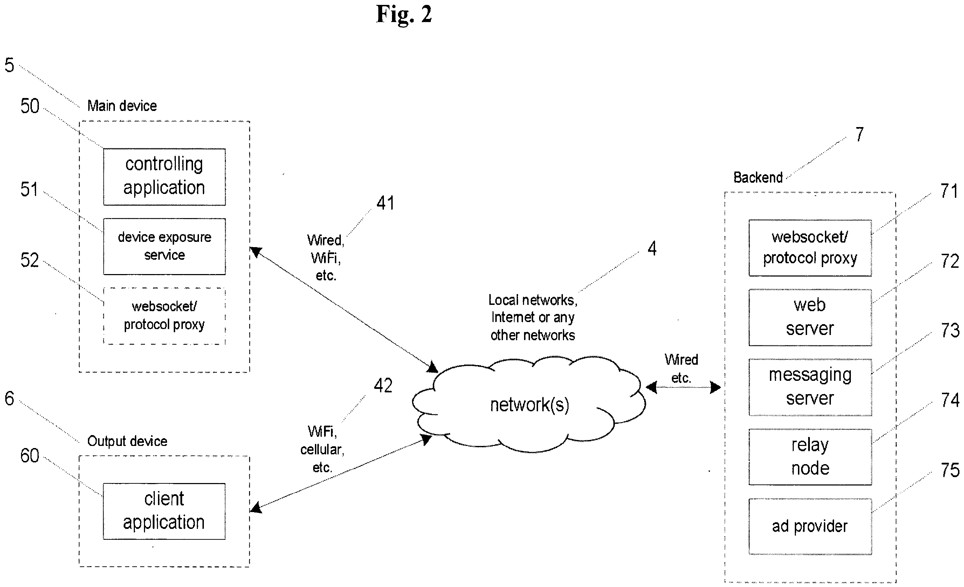

Application setup 5, 6, 7 of the respective entities 1, 2, 3 will be explained in the following. The software modules running on the entities 1, 2, 3 are shown in figure 2 wherein the application structure of the main device 1 is referenced with sign 5, the application structure of the output device 2 is referenced with sign 6 and the application structure of the backend 3 is referenced with sign 7.

The main device 1 runs a controlling application 50, a device exposure service 51, and optionally a web socket / protocol proxy 52. The controlling application 50 is the end user application. It is used by the user to control and trigger the pairing process and to interact with the process. The device exposure service 51 exposes the screen of the devices using an appropriate protocol (usually a remote desktop or screencast protocol). A server implementation of SPICE is suited since it is an open protocol that is capable to process audio and video well. Another option would be to expose the screen content using a WebRTC (Web Real-Time Communication; an API/standard by the World Wide Web Consortium for browser-based realtime communication) stream. The controlling application 50 and the device exposure service 51 can also be implemented as a single application.

The optional web socket / protocol proxy 52 is only needed if the output device 6 requires a different protocol for screen sharing/mirroring so that a protocol translation is needed. Such a translation can also be done within the backend 71 but if a direct connection between the main device 1 and the output device 2 shall be established instead of employing an indirect connection via the backend 3 (which would result in higher latency), the translation needs to be done on the main device 1.

The output device 2 runs a client application 60. That client application 60 controls the interaction with the backend 3 and the main device 1, renders the screen content and gets and processes events from relevant peripheral devices. The client application 60 can be a web browser with a client-side script running in it or a stand-alone client application 60 that does not make use of a web browser. A stand-alone application would control the screen and the input/output devices and would implement a remote desktop or screencast client. The alternative would be to provide this functionality by a web browser running a client-side script in it. The client-side script could use web technologies (WebRTC) or implement a different protocol. The stand-alone client 60 has performance benefits, but an implementation is required for each platform increasing efforts. The browser-based client application can be used on any platform that provides an up-to-date web browser (so that current technologies like web sockets and WebRTC are available).

The backend 3 consists of a web socket/protocol proxy 71, a web server 72, a presence server 73, a relay node 74, and an ad server 75. Some of these are optional, see the further description.

A web socket/protocol proxy 71 is needed when protocol conversions are needed (e.g. when a browser-based client application 60 using web sockets is used on the output device 2 but a different approach on the main device 1. Then the proxy 71 converts protocol messages in http protocol messages that can be transmitted to and from web browsers). For instance, if the main device 5 uses a remote desktop protocol like SPICE, the proxy 71 can act as a SPICE client and provide events via http web sockets to the client application 60 running in an html5-capable web browser.

The web server 72 provides content to the main device 1 and the output device 2 whenever needed. Any other means for content delivery could be used as well. However, using a web server 72 ensures that the devices 5, 6 do not have trouble connecting since the http/https protocol is usually allowed in firewalls.

The messaging server 73 is an instant messaging server where clients can register their presence and then exchange messages with each other. For instance, an XMPP (Extensible Messaging and Presence Protocol) server like Open-Fire can be used. Any other messaging platform, e.g. based on the IMS (IP multimedia subsystem) can be used as well.

The relay node 74 provides connectivity between the main device 1 and the output device 2 for the case that a direct connection between these devices 1, 2 is not possible, e.g. due to firewalls or other middleboxes. If an XMPP server 73 is used as a "presence server", the relay node 74 can be a so-called "Jingle node". Jingle is an XMPP standard that includes relay node service.

The ad provider 75 provides content for advertisements. It is optional and only needed in case ads shall be shown to the user in order to create revenue for the use of the solution. Note that the ads can be target-specific (using information about the user) and context-specific (using information about the environment/context of the user, e.g. devices, location, time of day).

In the following the method is described from a technical point-of-view: In the following exemplary description, it is assumed that a browser-based client capable of using WebRTC on the output device 2 is used. However, the other variants described above are possible as well. It is also assumed that an XMPP messaging server 73 is used. It is also assumed that QR codes are used for encoding data into a graphical representation. Of course, the other options mentioned are possible as well. For instance, any other appropriate coding scheme can be used instead of QR codes, too.

### 1. Running application on output device 2:

The web browser on the output device 2 loads a web page from the web server 72. Any functionality needed is provided by a server-side application (e.g. php or Python web application) and the client-side implementation running in the web browser (e.g. html5/Javascript). The following tasks take place:
The output device 2 is represented as a registered XMPP user in the XMPP messaging server. The presence status of that user is set to "online". Communication with the XMPP user that represents the output device 2 is now possible via the messaging server 73. Instead of registering a new (temporary) XMPP user on each invocation, a browser cookie with the registered XMPP identity can be stored on the output device 2. In the next invocation, the XMPP user registered previously can be reused. Reusing the XMPP user also helps in creating a permanent output device 2 identity which can help in target-specific and context specific advertising.

The XMPP user and an additional security token is coded in an URI and shown on the web page encoded as a QR code. The security token and therewith the QR code needs to change regularly (e.g. every 60 seconds). The temporarily valid security token is used to ensure that old URIs cannot be used any more (to avoid connecting to the output device 2 without being /having been physically present within the validity time window). For instance, such an URI could look like this:
*"xmpp:dev12345678@xmpp.telefonica.com?time*=*2013-08-07T16:32&token=a840fef347a2ge"*

The security token can in the simplest form be a random number but more complex schemes can be used. As an extension, the use of an URL instead of an URI is recommended. It could look like this:
*"https:*/ /*xyz.telefonica.com*/*?xmpp*=*dev12345678&time*=*2013-08-07T16:32&token*=*a840fef347a2ge"*

The data from the URI is contained within the query string and can be extracted from there. When surfing to the web page, a manual describing how to download the smartphone/tablet application and more information on how to use the solution can be shown at the main device 1. Helpful information is shown to the user independently of the specific QR code scanning app used by him. The encoded URI/URL is shown on the screen of the output device 2.

Optionally, ads can be shown in the spare area of the screen of the output device 2. If a permanent XMPP user is used and information on the devices/user connecting to the output device 2 is logged and analyzed in the backend 3, ads can even be targeted to the user's personal preferences.

Instead of a QR code, an NFC tag attached to the output device 2 could be scanned to retrieve the URL. Since this URL can only be static for cheap NFC tags, an interactive handshake procedure is needed (e.g. some text is shown on the output device 2 that needs to be entered on the main device 1 to prove proximity).

### 2. Running application 50 on main device 1:

The application (controlling application 50) is expected to be a stand-alone application since it needs access to the device's hardware. Alternatively, some webbrowsers offer the capability to expose the screen content of the device on which they are running on. After being started, the application 50 connects to the XMPP server 73 in the backend 3 and sets its presence status to "online". On first usage, a new XMPP user needs to be created beforehand. The application has the capability to scan QR codes.

Ads can be shown within the application. They are retrieved from the ad server 75 in the backend 3 (via http/https).

### 3. Scanning the QR code:

When the user scans the OR code with the main device 1 shown on the screen of the output device 2, the QR code data is decoded by the application. Now the application knows the XMPP user of the output device 2 and the current security token.

### 4. Connecting:

Via XMPP messaging between the controlling application 50 on the main device 1 and the application 60 on the output device 2 (or the representing server-side script, respectively), the connection details (e.g. supported protocols, screen sizes, network reachability) are negotiated and the validity of the security token is checked. With the negotiated parameters, the screencasting and optionally the forwarding of input devices and/or other output devices is established. In the assumed setup, the device exposure service 51 acts as a remote desktop server / screencasting server, the application 60 on the output device 2 acts as client. An appropriate protocol that also supports video is used, e.g. SPICE. The screen updates, optionally audio, and device events can be encapsulated in the html protocol (using WebRTC) to support browser-based clients and to avoid firewall restrictions.

An encapsulation / protocol conversion can be done by the web socket/protocol proxy 52, 71 when main device 1 and output device 2 use different protocols. A direct connection that is not redirected via the backend 3 is preferred to optimize resource usage and decrease latency. If a connection needs to be redirected via the backend 3 since direct connectivity is not available, relay nodes 74 are used for this purpose.

In case ads are shown besides of the QR code, it makes sense to give the user a choice whether to just connect or whether to connect and open a web browser with more information regarding the currently shown ad (in case of multiple ones, the user can choose). For that purpose, during the negotiation phase information regarding the currently shown ads on the output device 2 can also be sent to the controlling application 50 on the main device 1. With that data, a selection box can be shown to the user with which he either can select to just connect or to connect and retrieve product information.

### 5. Normal work:

The controlling application 50 goes into the background. As already described in the user perspective, the user can now use his device 1 as usual, seeing the screen output also on the screen of the output device 2. The remote desktop / screencast protocol takes care of the screen updates and also of the forwarding of the output device's input devices or even output devices (if present) to the main device 1.

### 6. Disconnecting:

The user brings the application 50 into the foreground again and selects to disconnect. The running connections are shut down and the applications 50, 60 on both devices 1, 2 go back into the initial state (but keeping their presence status with the XMPP server 74).

All the network traffic between the three entities 1, 2, 3 should be encrypted (e.g. using SSL) and the peers should authenticate themselves (e.g. using certificates). Ideally, the need for protocol proxies in the backend 3 should be avoided so that data can be encrypted end-to-end. Implementation should be in a way that there is no need to trust the backend 3 or the network 4.

In the example described above, the connection is initiated from the main device.1 If the output device 2 and the main device 1 trust each other (e.g., both have the same owner; in any case: trust relationship needs to be established beforehand), connections initiated from the output device 2 can be allowed as well thus improving usability.

### Extension to support main device 1 without an input devices

In the presented solution, the user's main input device is on the main device 1. Peripheral devices of the output device 2 can be used optionally just as if they were directly connected to the main device 1 (using the remote desktop protocol). However, also main devices 1 without any input devices (or with insufficient input devices) can be used.

Instead, the connection needs to be established by the user using the output device 2 (screen and input devices). In this case, the pairing based on QR code might not be possible. Alternatively, the user can enter the XMPP user of the main device 1 manually at the output device 2 and some authentication/authorization procedure needs to be performed for security purposes (check whether the user is authorized to connect to the main device 1).

As entering the XMPP user puts some effort on the user, an NFC tag on the main device 1 could be read by an NFC reader of the output device 2 instead. The proximity proved by the NFC communication could also avoid the need to another authentication/authorization procedure.

### Extension to support headless main device

The main device 1 could not only have no input device but even have no screen. In this case, screen mirroring is not possible and the screen of the output device 2 would be used as the (current) primary screen of the main device 1. Connection setup would be initiated as described for main devices 1 without input devices in the previous subsection.

The main device 1 could be a wrist watch. Another option would be to have no physical main device 1 at all but to have a virtual device running in the cloud (e.g. a Cloud desktop).

### Extension to support headless output device

Similarly, the output device could have no screen but some other input/output device. The pairing process would need to be adapted for this. An example application would be an ATM in which the bank-connected cash expenser would be a special output device. The input device could be running a banking app. Instead of the regular pairing, the user could insert his bank account card into a connected input device.

### Output device 2 does not need to be local

The connection establishment using a link contained in a QR-code or NFC tag can be generalized. A link can be shared by arbitrary means, e.g. via email. Permissions whether a connection is granted or not need to be checked in the negotiation phase.

### Multiple output devices

Multiple output devices 2 can show the screen of the main device 1 simultaneously The screen content can be multicast to multiple output devices 2. Duplication can be done in the main device 1 or in the backend 3. The latter is preferred as it is expected to be connected with more bandwidth.

### Some Example Use-cases

- Use screen in hotel room (e.g. TV) in hotel room as output device 2 for media on personal smartphone or tablet 1.
- Screen (of output device 2) in hotel lobby shows hotel ads. The user can attach to the output device 2 and book services using the credentials on the main device 1 (user's smartphone) while conveniently using the big touchscreen (of output device 2) as input device.
- Show a video or dia show stored on my smartphone 1 on the computer or TV 2 of a friend ad-hoc without prior configuration.

## Claims

1. A method for pairing at least two electronical devices by use of a backend entity running a messaging service wherein the method comprises the following steps:
registering a first electronical device at the backend entity for indicating its presence at the messaging service,
registering a second electronical device at the backend entity for indicating its presence at the messaging service,
exchanging and/or negotiating pairing information between the first and second device via the messaging service, and
pairing the first and second device by use of the exchanged pairing information for displaying screen information provided by the first device on a screen of the second device.

2. The method according to claim 1, **characterised in that** the pairing step includes setting up a working connection, in particular a direct connection, via a remote desktop protocol, e.g. SPICE and/or X11 and/or VNC and/or Citrix and/or NX, and/or a screencast protocol, e.g. AirPlay and/or WiDi and/or Miracast and/or DIAL, and/or a browser-based application, e.g. Websocket, WebRTC or the like.

3. The method according to any of the preceding claims, **characterised in that** the second device makes registration information about its registration at the messaging service available for retrieval by the first device, preferable in combination with a token having a limited validity period wherein said registration information is preferably generated and provided by the backend entity to the second device.

4. The method according to claim 3 **characterised in that** the second device displays the registration information on its local screen, in particular by way of a webpage which is generated by a webserver of the backend entity and accessed by the second device for displaying the webpage on its local screen.

5. The method according to any of claims 3 or 4, **characterised in that** the registration information is coded into a machine-readable graphical code, such as a QR-code, and is displayed on the screen of the second device.

6. The method according to claim 3 **characterised in that** the registration information is provided by a NFC tag arranged at the second device and/or the registration information is shared via Email or the like.

7. The method according to any of claims 3 to 6, **characterised in that** in case the registration information is accessed by the first device an exchange and/or negotiation of pairing information is initiated via the messaging service of the backend entity and optionally dependent on the validity of the included token which is verified at the backend entity.

8. The method according to claim 7 **characterised in that** the registration information can be accessed by the first device via a URI or URL including the registration information and addressing a webpage provided by the web server of the backend entity wherein the webpage offers a guide for the user of the first device for initiating the exchange of paring information.

9. The method according to any of the claims 3 to 8 **characterised in that** the backend entity includes an advertising provider or is linked to an advertising provider which is used to deliver advertisement together with the registration information displayed at the second device and/or the webpage provided for the first device wherein the delivered advertisement is preferable targeted to the user of the first device and/or second device particularly based on data necessary for registering the devices at the messaging service and/or context like location of the devices, time of day and the devices involved.

10. The method according to any of the preceding claims **characterised in that** the pairing information contains details about the supported protocols, e.g. supported remote desktop protocols and/or a screencast protocols, and/or screen sizes and/or network reachability.

11. The method according to any of the preceding claims **characterised in that** the method steps at the first and/or second device are either controlled by a local stand-alone application or by a script running web browser.

12. The method according to any of the preceding claims **characterised in that** a proxy application is integrated at the first device and/or the backend entity, which converts a first protocol supported by the first device for the working connection into a second protocol supported by the second device for the working connection.

13. The method according to any of the preceding claims **characterised in that** a relay node is implemented at the backend entity ensuring connectivity between the first and second device in case no direct working connection is possible.

14. The method according to any of the preceding claims **characterised in that** the second devices is integrated in a local network, in particular a secured network, wherein the pairing information includes access credentials for said local network of the second device and the first device gets access to the local network during the pairing process step.

15. The method according to any of the preceding claims **characterised in that** the exchange of pairing information between the first and second device can be initiated via the second device, in particular by inserting registration information of the first device at the second device.

16. The method according to any of the preceding claims **characterised in that** in case the screen information displayed on the screen of the first device and to be mirrored to the second device is originally provided by a third party server, in particular a cloud-desktop, said screen information is directly retrieved by the second device from the third party server.

17. A system comprising a backend entity, at least a first and a second device all configured to perform the method according to any of the preceding claims.

18. A backend entity configured to perform the method according to claims 1 to 14 and in particular including a web socket/protocol proxy, a webserver, a messaging server, a relay node and an ad provider.

19. A computer readably memory storage device storing software code for carrying out the method according to the invention at the first device and/or second device and/or the backend entity.
